# EUROPÄISCHE PATENTSCHRIFT

(11) **EP 1 160 718 B1**
(45) Veröffentlichungstag und Bekanntmachung des Hinweises auf die Patenterteilung: **22.06.2005**
(21) Anmeldenummer: 01108942.2
(22) Anmeldetag: 10.04.2001
(51) Int. Cl.: G06K 7/10, G01S 17/02, G01S 7/481, G01C 3/08, G01S 7/497

(54) **Laserscanner**
Laser scanner
Appareil à balayage laser

(30) Priorität: 29.05.2000 DE 10026668
(43) Veröffentlichungstag der Anmeldung: 05.12.2001
(73) Patentinhaber: SICK AG, 79183 Waldkirch (DE)
(72) Erfinder: Damm, Hartmut, 79650 Schopfheim-Fahrnau (DE)
(74) Vertreter: Manitz, Finsterwald & Partner GbR

(56) Entgegenhaltungen:
- DE-A- 4 412 044
- DE-A- 19 907 546
- US-A- 5 455 669

## Beschreibung

Die Erfindung betrifft einen Laserscanner mit einer einen Laser und eine Sendeoptik umfassenden Sendeanordnung, einer Lichtablenkeinrichtung und einer eine Empfangslinse und einen optoelektronischen Photoempfänger umfassenden Empfangsanordnung, bei dem von der Sendeanordnung ausgesendetes Licht über die Lichtablenkeinrichtung unter verschiedenen Winkeln durch eine Frontscheibe hindurch in einen Meßbereich lenkbar ist und von einem sich im Meßbereich befindenden Objekt zurückgeworfenes Licht im Sinne eines Autokollimationsstrahlengangs zurück zur Lichtablenkeinrichtung und anschließend zur Empfangsanordnung gelangt, wobei das Empfangslicht in einem Kernbereich zumindest teilweise abgeschattet wird. Ein solcher Laserscanner ist aus US-A-5 455 669 und DE-A-4 412 044 schon bekannt. Hierbei kann es sich insbesondere um einen Pulslaserscanner mit einem Impulslaser handeln.

Zu den Anforderungen bei Laserscannern wie insbesondere den im Bereich der Sicherheitstechnik eingesetzten Pulslaserscannern zählt, daß schwarze Objekte auch im extremen Nahbereich noch erfaßt werden. Da diese Anforderung im Gegensatz zu der weiteren Forderung steht, daß Verschmutzungen auf der Frontscheibe nicht als Hindernis erfaßt werden dürfen, ist bei den bisher üblichen Systemen für das Sendelicht und das Empfangslicht ein Autokollimationsstrahlengang vorgesehen, bei dem ein mittlerer Bereich des Empfangslichtes durch einen Sendekollimator abgeschattet wird. Dabei besitzt die Empfangslinse mehrere Zonen unterschiedlicher Brennweite, wobei vorzugsweise die mittlere Zone die kürzeste Brennweite aufweist. Demzufolge können Objekte in großer Entfernung über einen radial äußeren Fernbereich der Empfangslinse erfaßt werden. Das Empfangslicht verläuft dabei weitgehend parallel zum Sendelicht, trifft auf den Fernbereich der Empfangslinse und wird auf den Empfänger fokussiert. Je näher das Objekt vor der Empfangslinse liegt, desto weiter wandert der Brennpunkt des Empfangslichtbündels hinter den Empfänger. Ab einem bestimmten Abstand ist das Objekt nicht mehr erfaßbar. Durch die kürzere Brennweite des radial innenliegenden Nahbereichs der Empfangslinse wird das von einem näher gelegenen Objekt stammende Empfangslichtbündel über diesen Nahbereich auf den Empfänger fokussiert. Damit sind auch sich in der Nähe des Laserscanners befindende Objekte erfaßbar.

Bei einer solchen Anordnung tritt nun aber das Problem auf, daß infolge von Formtoleranzen der Empfangslinse der minimale Abstand, bei dem ein nahes Objekt noch erfaßt werden kann, stark variiert. Bisher werden solche Abweichungen ausschließlich über eine entsprechende Änderung der Position des Empfängers entsprechend korrigiert. Dabei wird der Empfänger so justiert, daß sowohl von einem nahen Objekt als auch von einem fernen Objekt noch genügend Licht auf den Empfänger fällt, um das betreffende Objekt erfassen zu können. Eine solche Einstellung der Empfängerposition stellt nun aber lediglich einen Kompromiß zwischen einer optimalen Abbildung für den Fernbereich und einem ausreichenden Signal für den Nahbereich dar. Da damit insbesondere auch die Signaldynamik, d.h. das Verhältnis von maximalem Signal zu minimalem Signal, größer wird, wird der betreffende Scanner auch empfindlicher, was dazu führen kann, daß ungewollt insbesondere auch Staubwolken, Dämpfe und/oder dergleichen erfaßt werden. Entsprechend kann diese Überempfindlichkeit im Zusammenhang mit der üblicherweise vorhandenen Lichtschrankenfunktion zu unerwünschten Abschaltungen führen. Dabei können insbesondere auch Verschmutzungen der Frontscheibe solche Fehlabschaltungen zur Folge haben.

Ziel der Erfindung ist es, einen verbesserten Laserscanner der eingangs genannten Art zu schaffen, bei dem eventuelle Formtoleranzen der Empfangslinse auf möglichst einfache und zuverlässige Weise kompensierbar sind, ohne dabei gleichzeitig auch die Signaldynamik zu vergrößern.

Diese Aufgabe wird nach der Erfindung dadurch gelöst, daß Justiermittel vorgesehen sind, über die die Größe des Kernschattens des Empfangslichtes variabel einstellbar ist.

Aufgrund dieser Ausbildung können die sich bei Objekten im Nahbereich ergebenden, auf die Formtoleranzen der Empfangslinse zurückgehenden Signalunterschiede auf einfache und zuverlässige Weise dadurch kompensiert werden, daß über die betreffenden Justiermittel die Größe des Kernschattens des Empfangslichtes entsprechend verändert wird. Die Signaldynamik wird dadurch nicht beeinflußt. Diese kann vielmehr durch eine entsprechende Einstellung der Empfängerposition minimiert werden, um auch für weiter entfernte Objekte möglichst optimale Abbildungsverhältnisse zu erhalten.

Die betreffenden Justiermittel umfassen zweckmäßigerweise wenigstens eine verstellbare Blende.

Eine solche Blende kann in Ausbreitungsrichtung des Empfangslichtes betrachtet vor oder hinter der Empfangslinse angeordnet sein. Grundsätzlich ist es auch denkbar, sowohl vor als auch hinter der Empfangslinse jeweils wenigstens eine solche Blende anzuordnen.

Die jeweilige Blende kann um eine Achse drehbar gelagert oder linear verschiebbar sein.

Ist die Blende um eine Achse drehbar gelagert, so verläuft die Drehachse vorzugsweise parallel zur optischen Achse der Empfangslinse.

Eine linear verschiebbar Blende kann beispielsweise quer oder parallel zur optischen Achse der Empfangslinse verschiebbar sein. Im letzteren Fall ist die Blende vorzugsweise entlang der betreffenden optischen Achse verschiebbar.

Bei einer weiteren vorteilhaften Ausführungsform ist die Blende in Richtung eines der Sendeanordnung zugeordneten Kollimators oder quer dazu verschiebbar.

Vorzugsweise ist ein Teil des maximalen Kernschattens bereits durch einen Sendekollimator erzeugt. In diesem Fall ist die Blende zweckmäßigerweise zwischen einer ersten Position, in der der Kernschatten seine minimale Größe annimmt und zumindest im wesentlichen nur durch den Sendekollimator erzeugt ist, und einer zweiten Position verstellbar, in der der Kernschatten seine maximale Größe annimmt.

Die Lichtablenkeinrichtung kann insbesondere einen Drehspiegel umfassen.

Bei einer bevorzugten praktischen Ausführungsform des erfindungsgemäßen Laserscanners ist der Autokollimationsstrahlengang durch den Strahlengang einer Autokollimationslichtschranke gebildet. Über eine solche Lichtschranke sind dann insbesondere auch entsprechende Sicherheitsabschaltungen möglich, sobald ein jeweiliges Objekt im überwachten Meßbereich erfaßt wird.

Um insbesondere auch sehr nahe am Laserscanner angeordnete Objekte zuverlässig und sicher erkennen zu können, weist die Empfangslinse vorteilhafterweise wenigstens zwei Zonen unterschiedlicher Brennweite auf. Dabei sind vorzugsweise wenigstens zwei radial aufeinanderfolgende Zonen unterschiedlicher Brennweite vorgesehen, wobei in diesem Fall die Brennweite vorteilhafterweise von Zone zu Zone radial nach außen größer wird.

Es ist jedoch auch eine solche Ausführungsform denkbar, bei der die Brennweite der Empfangslinse zumindest bereichsweise radial von innen nach außen kontinuierlich größer wird.

Als Laser ist vorzugsweise ein Impulslaser vorgesehen.

Die Erfindung wird im folgenden anhand eines Ausführungsbeispiels unter Bezugnahme auf die Zeichnung näher erläutert; in dieser zeigen:
- Figur 1: eine schematische, teilweise geschnittene Darstellung eines Laserscanners mit einem Strahlenverlauf, wie er sich bei sehr weit entfernten Objekten ergibt,
- Figur 2: eine schematische, teilweise geschnittene Darstellung des Laserscanners mit einem Strahlenverlauf, wie er sich bei in geringer Entfernung vorgesehenen Objekten ergibt,
- Figur 3: eine schematische Ansicht der verstellbaren Blende sowie der Empfangslinse des Laserscanners in Richtung des Pfeils F der Figur 1, wobei zwei verschiedene Positionen der verstellbaren Blende dargestellt sind,
- Figur 4: eine schematische Ansicht des die Sendeanordnung, die verstellbare Blende und die Empfangslinse umfassenden Teils des Laserscanners in Richtung des Pfeils G der Figur 1, wobei die Blende eine erste Position einnimmt, in der der Kernschatten seine minimale Größe annimmt,
- Figur 5: die gleiche Ansicht wie in der Figur 4, wobei die Blende jedoch eine zweite Position einnimmt, in der der Kernschatten seine maximale Größe aufweist,
- Figur 6: eine schematische Seitenansicht des die Sendeanordnung, die verstellbare Blende und die Empfangslinse umfassenden Teils des Laserscanners, wobei die Blende beispielsweise wieder ihre erste Position einnimmt,
- Figur 7: eine Draufsicht des Laserscanners in Richtung des Pfeiles C in Figur 1 mit um 90° gedrehtem Drehspiegel und einem Strahlenverlauf, wie er sich bei einer Verschmutzung der Frontscheibe und minimalem Kernschatten ergibt,
- Figur 8: eine Draufsicht des Laserscanners entsprechend Figur 7 mit um 90° gedrehtem Drehspiegel und einem Strahlenverlauf, wie er sich bei einer Verschmutzung der Frontscheibe und maximalem Kernschatten ergibt, und
- Figur 9: ein schematisches Diagramm, in dem verschiedene Verläufe des vom optoelektronischen Photoempfänger gelieferten Empfangssignals über der Objektentfernung dargestellt sind.

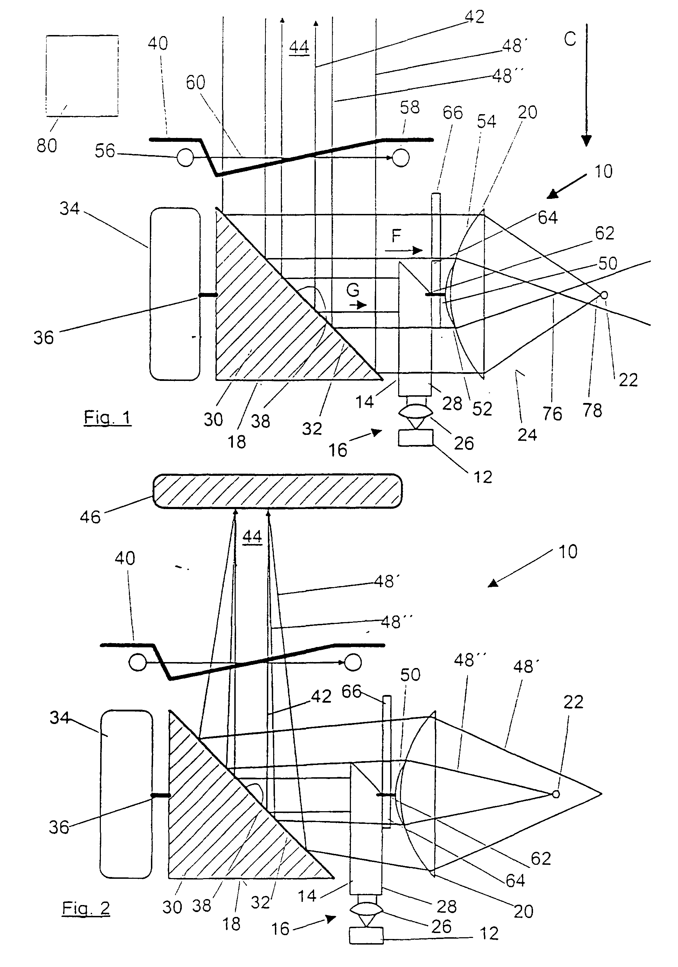

Der in den Figuren 1 bis 8 gezeigte Laserscanner 10 besitzt eine einen Laser 12, insbesondere Impulslaser, sowie eine Sendeoptik 14 umfassende Sendeanordnung 16, eine insbesondere mit einem Drehspiegel versehene Lichtablenkeinrichtung 18 und eine eine Empfangslinse 20 sowie einen optoelektronischen Photoempfänger 22 umfassende Empfangsanordnung 24.

Die Sendeoptik 14 kann insbesondere eine Sendelinse 26 und einen Sendekollimator 28 umfassen.

Die Lichtablenkeinrichtung 18 umfaßt einen Spiegel 32, der auf einem über einen Motor 34 um eine Achse 36 drehbaren Spiegelträger 30 angebracht ist. Die Drehachse 36 verläuft parallel zur optischen Achse der Empfangslinse 20. Der Spiegel 32 ist gegenüber der Drehachse 36 und entsprechend gegenüber der optischen Achse der Empfangslinse 20 um 45° geneigt.

Ein zentraler Bereich 38 der Lichtablenkeinrichtung 18 empfängt über die Sendelinse 26 und den Sendekollimator 28 Licht des Lasers 12. Das zunächst vertikale Lichtbündel wird durch den Sendekollimator 28 in eine horizontale Richtung umgelenkt, um dann von der Lichtablenkeinrichtung 18 in eine vertikale Richtung zu einer Frontscheibe 40 des Laserscanners 10 umgelenkt zu werden. Das durch diese Frontscheibe 40 hindurchgehende Sendelichtbündel 42 gelangt in den zu überwachenden Meßbereich 44. Von einem sich im Meßbereich 44 befindenden Objekt 46 (vgl. insbesondere Figur 2) gelangt Streulicht als Empfangslichtbündel 48 durch die Frontscheibe 40 im Sinne eines Autokollimationsstrahlengangs zurück zur Lichtablenkeinrichtung 18.

Das von der Lichtablenkeinrichtung 18 allgemein in horizontaler Richtung umgelenkte Empfangslichtbündel 48 wird durch den Sendekollimator 28 in einem Kernbereich 50 zum Teil abgeschattet. Der nicht abgeschattete Teil des Empfangslichtbündel 48 trifft auf die Empfangslinse 20, durch die es entsprechend fokussiert wird.

Der beschriebene Autokollimationsstrahlengang ist im vorliegenden Fall durch den Strahlengang einer Autokollimationslichtschranke gebildet.

Die Empfangslinse 20 besitzt Zonen unterschiedlicher Brennweite, im vorliegenden Fall eine radial innere Zone 52 kleinerer Brennweite und eine radial äußere Zone 54 relativ größerer Brennweite. Entsprechend ist die innere Zone 52 der Empfangslinse 20 dem Nahbereich und die äußere Zone 54 dem Fernbereich zugeordnet.

Die Frontscheibe 40 ist derart ausgeführt, daß eine Durchstrahlung mittels innerhalb des Gehäuses des Laserscanners 10 angeordneten Sendern 56 und Empfängern 58 möglich ist und entsprechend eine Verschmutzungsmessung durchgeführt werden kann. Dabei kann anhand der gemessenen schmutzbedingten Beeinflussung der die Frontscheibe 40 durchdringenden Lichtbündel 60 auf den Verschmutzungsgrad der Frontscheibe 40 geschlossen werden.

Objekte in größerer Entfernung können über die äußere Zone 54 der Empfangslinse 20 erfaßt werden. Dabei verläuft das betreffende Empfangslichtbündel 48' zumindest im wesentlichen parallel zum Sendelichtbündel 42. Es wird durch die Empfangslinse 20 auf den optoelektronischen Photoempfänger 22 fokussiert (vgl. insbesondere Figur 1).

Je näher das Objekt 46 vor der Empfangslinse 20 liegt, desto weiter wandert das Empfangslichtbündel 48' hinter den Photoempfänger 22 (vgl. z.B. Figur 2). Da die dem Nahbereich zugeordnete innere Zone 52 der Empfangslinse 20 eine kürzere Brennweite besitzt, wird das Empfangslichtbündel 48" auf den Photoempfänger 22 fokussiert. Damit sind auch Objekte in der Nähe des Laserscanners 10 erfaßbar.

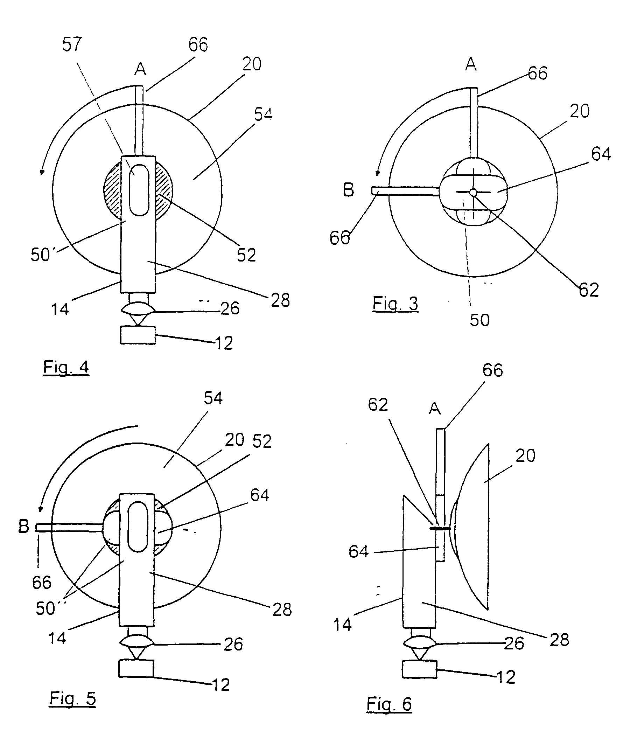

Um durch Formtoleranzen der Empfangslinse 20 bedingte Signalunterschiede bei sich im Nahbereich befindenden Objekten ausgleichen zu können, sind Justiermittel vorgesehen, über die die Größe des Kernschattens 50', 50" (vgl. die Figuren 4 bis 8) des Empfangslichtes variabel einstellbar sind. Im vorliegenden Fall umfassen diese Justiermittel eine in Ausbreitungsrichtung des Empfangslichtes 48 betrachtet vor der Empfangslinse 20 angeordnete, um eine Achse 62 drehbar gelagerte Blende 64. Die Drehachse 62 verläuft im vorliegenden Fall parallel zur optischen Achse der Empfangslinse 20.

Wie am besten anhand der Figuren 3 bis 5 zu erkennen ist, besitzt die Blende 64 eine in der Drehebene betrachtet längliche Gestalt, bezüglich der die Drehachse 62 mittig angeordnet ist. Die Blende 64 ist auch bezüglich der Empfangslinse 20 mittig angeordnet. Im vorliegenden Fall ist diese drehbare Blende 64 am Sendekollimator 28 gelagert.

Die Blende 64 ist beispielsweise über einen Hebel 66 zwischen einer ersten Position A, in der der Kernschatten seine minimale Größe annimmt, und einer zweiten Position B verstellbar, in der der Kernschatten seine maximale Größe besitzt (vgl. insbesondere die Figuren 3 bis 6). Wie insbesondere anhand der Figuren 3 bis 5 zu erkennen ist, ist die ihre erste Position A einnehmende Blende 64 mit dem Sendekollimator 28 ausgerichtet, so daß in diesem Fall der betreffende Kernschatten 50' zumindest im wesentlichen nur durch den Sendekollimator 28 erzeugt ist (vgl. insbesondere Figur 4).

Nimmt die Blende 64 dagegen ihre zweite Position ein, so trägt auch sie zur Bildung des betreffenden Kernschattens 50" bei (vgl. insbesondere Figur 5).

Im vorliegenden Fall ist die Blende 64 somit zwischen einer ersten Position A, in der der Kernschatten seine minimale Größe 50' annimmt und zumindest im wesentlichen nur durch den Sendekollimator 28 erzeugt ist, und einer zweiten Position B verstellbar, in der der Kernschatten seine maximale Größe 50" annimmt.

Die Position des optoelektronischen Photoempfängers 22 kann nun so eingestellt werden, daß sich hinsichtlich der weiter entfernten Objekte möglichst optimale Abbildungsverhältnisse ergeben, d.h. die Signaldynamik minimiert wird. Dagegen werden durch Formtoleranzen der Empfangslinse 20 bedingte Signalunterschiede bei sich im Nahbereich befindenden Objekten 46 durch eine entsprechende Einstellung der Größe des Kernschattens 50', 50" über die Blende 64 kompensiert. Dazu ist die Blende 64 beispielsweise über den Hebel 66 zwischen den beiden Positionen A und B entsprechend verstellbar (vgl. insbesondere Figur 3).

In der Darstellung gemäß Figur 4 nimmt die Blende 64 ihre erste, mit dem Sendekollimator 28 ausgerichtete Position A ein, in der der Kernschatten seine minimale Größe 50' aufweist und zumindest im wesentlichen nur durch den Sendekollimator 28 erzeugt ist. In dieser Figur 4 ist auch die Lichtaustrittsöffnung 57 des Kollimators 28 zu erkennen.

Dagegen nimmt die Blende 64 gemäß der Figur 5 ihre zweite Position B ein, in der der Kernschatten seine maximale Größe 50" besitzt und sowohl durch den Sendekollimator 28 als auch durch die Blende 64 erzeugt wird. Beim Übergang von der Position A zur Position B wird der Kernschatten 50', 50" zunehmend vergrößert.

In der Seitenansicht gemäß Figur 6 nimmt die Blende 64 beispielsweise wieder ihre erste Position A ein.

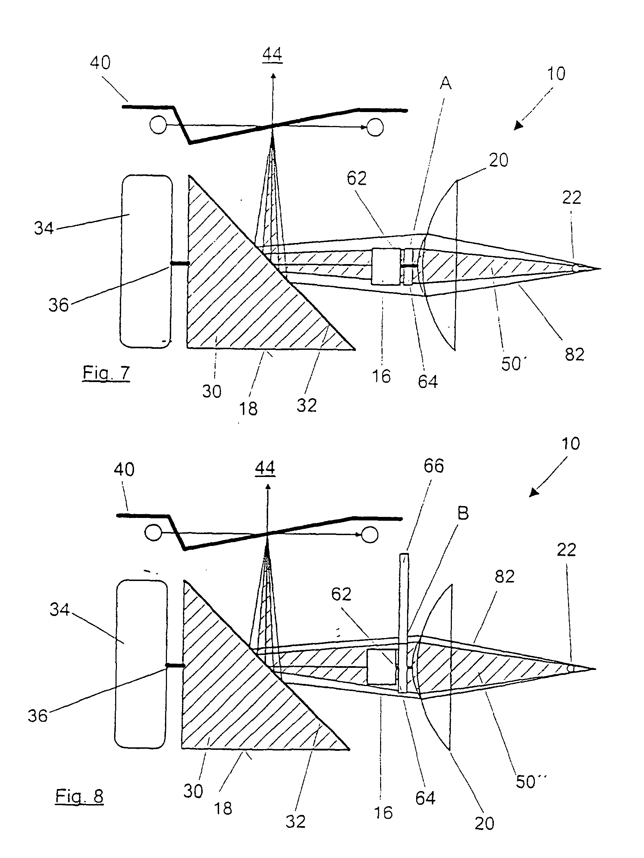

Figur 7 zeigt eine Draufsicht des Laserscanners 10 in Richtung des Pfeiles C in Figur 1 mit um 90° gedrehtem Drehspiegel 18 und einem Strahlenverlauf, wie er sich bei einer Verschmutzung der Frontscheibe 44 und minimaler Abdeckung bzw. minimalem Kernschatten 50' ergibt. Die Blende 64 nimmt hier also ihre Position A ein.

Auch Figur 8 zeigt wieder eine Draufsicht des Laserscanners 10 in Richtung des Pfeiles C in Figur 1 mit um 90° gedrehtem Drehspiegel 18, in diesem Fall jedoch mit einem Strahlenverlauf, wie er sich bei einer Verschmutzung der Frontscheibe 40 und maximaler Abdeckung bzw. maximalem Kernschatten 50" ergibt. Die Blende 64 nimmt hier also ihre Position B ein.

Die Blende 64 ist in ihrer in der Figur 7 wiedergegebenen ersten Position A minimaler Abdeckung wieder in der auch bereits in der Figur 4 dargestellten Weise mit dem Sendekollimator 28 ausgerichtet. Sie ist zwischen dieser ersten Position A minimalen Kernschattens 50' und ihrer zweiten Position B maximalen Kernschattens 50" (vgl. die Figuren 5 und 8) nun so verstellbar, daß das nahe Objekt 46 (vgl. Figur 2) noch erfaßt wird und Verschmutzungen auf der Frontscheibe 40 nicht zu Fehlabschaltungen führen.

Wie anhand der Figuren 7 und 8 zu erkennen ist, ergeben sich je nach Abdeckungsgrad unterschiedliche Empfangslichtbündel 82 der Verschmutzung der Frontscheibe 40.

In Figur 1 ist der Brennpunkt des Nahbereichs mit 76 und der Brennpunkt des Fernbereichs mit 78 bezeichnet.

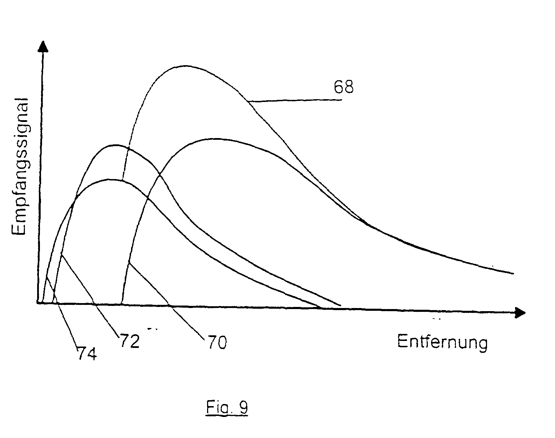

Figur 9 zeigt in schematischer Darstellung verschiedene Verläufe des über den optoelektronischen Photoempfänger 22 des Laserscanners erhaltenen Empfangssignals über der Objektentfernung. Dabei ist mit der Kurve 68 der verlauf des Summensignals aus Fernbereich und Nahbereich, mit der Kurve 70 der Signalverlauf bezüglich der den Fernbereich erfassenden Linsenzone 54, mit der Kurve 72 der Signalverlauf bezüglich der den Nahbereich erfassenden Linsenzone 52 bei maximaler Abdeckung und mit der Kurve 74 der Signalverlauf bezüglich der den Nahbereich erfassenden Linsenzone 52 bei minimaler Abdeckung wiedergegeben. Mit der Blende 64 wird hier lediglich der Nahbereich entsprechend beeinflußt.

Dem Laserscanner 10 ist eine Steuer- und Auswerteelektronik 80 (vgl. Figur 1) zugeordnet, an die der Laser 12, der optoelektronische Photoempfänger 22, die Sender 56, die Empfänger 58 und/oder der Motor 34 angeschlossen sein können.

### Bezugszeichenliste

- 10: Laserscanner
- 12: Laser, Impulslaser
- 14: Sendeoptik
- 16: Sendeanordnung
- 18: Lichtablenkeinrichtung, Drehspiegel
- 20: Empfangslinse
- 22: optoelektronischer Photoempfänger
- 24: Empfangsanordnung
- 26: Sendelinse
- 28: Sendekollimator
- 30: Spiegelträger
- 32: Spiegel
- 34: Motor
- 36: Drehachse
- 38: zentraler Bereich
- 40: Frontscheibe
- 42: Sendelichtbündel
- 44: Meßbereich
- 46: Objekt
- 48: Empfangslichtbündel
- 50: Kernbereich
- 50': minimaler Kernschatten
- 50": maximaler Kernschatten
- 52: innere Zone kleiner Brennweite
- 54: äußere Zone großer Brennweite
- 56: Sender
- 57: Lichtaustrittsöffnung des Kollimators
- 58: Empfänger
- 60: Lichtbündel
- 62: Drehachse
- 64: Blende
- 66: Hebel
- 68: Kurve
- 70: Kurve
- 72: Kurve
- 74: Kurve
- 76: Brennpunkt des Nahbereichs
- 78: Brennpunkt des Fernbereichs
- 80: Steuer- und Auswerteelektronik
- 82: Empfangslichtbündel der Verschmutzung

- A: erste Blendenposition
- B: zweite Blendenposition

## Patentansprüche

1. Laserscanner (10) mit einer einen Laser (12) und eine Sendeoptik (14) umfassenden Sendeanordnung (16), einer Lichtablenkeinrichtung (18) und einer eine Empfangslinse (20) und einen optoelektronischen Photoempfänger (22) umfassenden Empfangsanordnung (24), bei dem von der Sendeanordnung (16) ausgesendetes Licht (42) über die Lichtablenkeinrichtung (18) unter verschiedenen Winkeln durch eine Frontscheibe (40) hindurch in einen Meßbereich (44) lenkbar ist und von einem sich im Meßbereich (44) befindenden Objekt (46) zurückgeworfenes Licht (48) im Sinne eines Autokollimationsstrahlengangs zurück zur Lichtablenkeinrichtung (18) und anschließend zur Empfangsanordnung (24) gelangt, wobei das Empfangslicht (48) in einem Kernbereich (50) zumindest teilweise abgeschattet wird,
**dadurch gekennzeichnet,**
**daß** Justiermittel (64) vorgesehen sind, über die die Größe des Kernschattens (50', 50") des Empfangslichtes (48) variabel einstellbar ist.

2. Laserscanner nach Anspruch 1,
**dadurch gekennzeichnet,**
**daß** die Justiermittel wenigstens eine verstellbare Blende (64) umfassen, wobei insbesondere die Blende (64) in Ausbreitungsrichtung des Empfangslichtes (48) betrachtet vor oder hinter der Empfangslinse (20) angeordnet ist.

3. Laserscanner nach einem der vorhergehenden Ansprüche,
**dadurch gekennzeichnet,**
**daß** die Blende (64) um eine Achse (62) drehbar gelagert ist, wobei insbesondere die Drehachse (62) der Blende (64) parallel zur optischen Achse der Empfangslinse (20) verläuft.

4. Laserscanner nach Anspruch 3,
**dadurch gekennzeichnet,**
**daß** die um eine Achse (62) drehbar gelagerte Blende (64) eine in der Drehebene betrachtet längliche Gestalt besitzt.

5. Laserscanner nach einem der vorhergehenden Ansprüche,
**dadurch gekennzeichnet,**
**daß** die Drehachse (62) bezüglich der sich in der Drehebene ergebenden Gestalt der Blende (64) mittig angeordnet ist, und/oder
**daß** die gedachte Drehachse (62) der Blende (64) bezüglich der Empfangslinse (20) mittig angeordnet ist.

6. Laserscanner nach einem der Ansprüche 1 oder 2,
**dadurch gekennzeichnet,**
**daß** die Blende (64) linear verschiebbar ist, wobei
die Blende (64) insbesondere quer oder parallel zur optischen Achse der Empfangslinse (20) verschiebbar ist, und/oder
**daß** die Blende (64) entlang der optischen Achse der Empfangslinse (20) verschiebbar ist.

7. Laserscanner nach einem der vorhergehenden Ansprüche,
**dadurch gekennzeichnet,**
**daß** die Blende (64) in Richtung eines der Sendeanordnung (16) zugeordneten Kollimators (28) oder quer dazu verschiebbar ist.

8. Laserscanner nach einem der vorhergehenden Ansprüche,
**dadurch gekennzeichnet,**
**daß** ein Teil des maximalen Kernschattens (50) durch einen Sendekollimator (28) erzeugt ist, wobei insbesondere die Blende (64) zwischen einer ersten Position (A), in der der Kernschatten (50', 50") seine minimale Größe (50') annimmt und zumindest im wesentlichen nur durch den Sendekollimator (28) erzeugt ist, und einer zweiten Position (B) verstellbar ist, in der der Kernschatten (50) seine maximale Größe (50") annimmt.

9. Laserscanner nach einem der vorhergehenden Ansprüche,
**dadurch gekennzeichnet,**
**daß** die Lichtablenkeinrichtung (18) einen Drehspiegel (32) umfaßt.

10. Laserscanner nach einem der vorhergehenden Ansprüche,
**dadurch gekennzeichnet,**
**daß** der Autokollimationsstrahlengang durch den Strahlengang einer Autokollimationslichtschranke gebildet ist.

11. Laserscanner nach einem der vorhergehenden Ansprüche,
**dadurch gekennzeichnet,**
**daß** die Empfangslinse (20) wenigstens zwei Zonen unterschiedlicher Brennweite aufweist, wobei insbesondere die Empfangslinse (20) wenigstens zwei radial aufeinanderfolgende Zonen (52, 54) unterschiedlicher Brennweite aufweist, und /oder
die Brennweite von Zone zu Zone radial nach außen größer wird.

12. Laserscanner nach einem der vorhergehenden Ansprüche,
**dadurch gekennzeichnet,**
**daß** die Brennweite der Empfangslinse (20) zumindest bereichsweise radial von innen nach außen kontinuierlich größer wird.

13. Laserscanner nach einem der vorhergehenden Ansprüche,
**dadurch gekennzeichnet,**
**daß** als Laser (12) ein Impulslaser vorgesehen ist.

## Claims

1. A laser scanner (10) comprising a transmitter arrangement (16) including a laser (12) and an optical transmitter system (14), a light deflection device (18) and a receiver arrangement (24) including a receiver lens (20) and an optoelectronic photo-receiver (22), wherein light (42) transmitted by the transmitter arrangement (16) can be directed via the light deflection device (18) at different angles through a front screen (40) into a measuring zone (44) and light (48) reflected back from an object (46) located in the measuring zone (44) passes back to the light deflection device (18) in the sense of an auto-collimation beam path and subsequently to the receiver arrangement (24), wherein the received light (48) is at least partly screened off in a core region (50),
**characterised in that**
adjustment means (64) are provided via which the magnitude of the core shadow (50', 50") of the received light (48) can be variably adjusted.

2. A laser scanner in accordance with claim 1, **characterised in that** the adjustment means include at least one adjustable diaphragm (64), wherein the diaphragm (64) is in particular arranged in front of or behind the receiver lens (20) when considered in the direction of propagation of the received light (48).

3. A laser scanner in accordance with any one of the preceding claims, **characterised in that** the diaphragm (64) is rotatably supported about an axis (62), with the axis of rotation (62) of the diaphragm (64) extending in particular parallel to the optical axis of the receiver lens (20).

4. A laser scanner in accordance with claim 3, **characterised in that** the diaphragm rotatably supported about an axis (62) has an elongate design when considered in the plane of rotation.

5. A laser scanner in accordance with any one of the preceding claims, **characterised in that** the axis of rotation (62) is arranged centrally with respect to the design of the diaphragm (64) resulting in the plane of rotation; and/or
**in that** the imagined axis of rotation (62) of the diaphragm (64) is arranged centrally with respect to the receiver lens (20).

6. A laser scanner in accordance with any one of the claims 1 or 2, **characterised in that** the diaphragm (64) is linearly displaceable, wherein the diaphragm is in particular displaceable transversely or parallel to the optical axis of the receiver lens (20); and/or
**in that** the diaphragm (64) is displaceable along the optical axis of the receiver lens (20).

7. A laser scanner in accordance with any one of the preceding claims, **characterised in that** the diaphragm (64) is displaceable in the direction of a collimator (28) associated with the transmitter arrangement or transversely thereto.

8. A laser scanner in accordance with any one of the preceding claims, **characterised in that** a part of the maximum core shadow (50) is generated by a transmitter collimator (28), wherein the diaphragm (64) is in particular adjustable between a first position (A), in which the core shadow (50', 50") adopts its minimum size (50') and is at least substantially only generated by the transmitter collimator (28), and a second position (B) in which the core shadow (50) adopts its maximum size (50").

9. A laser scanner in accordance with any one of the preceding claims, **characterised in that** the light deflection device (18) includes a rotary mirror (32).

10. A laser scanner in accordance with any one of the preceding claims, **characterised in that** the auto-collimation beam path is formed by the beam path of an auto-collimation light barrier.

11. A laser scanner in accordance with any one of the preceding claims, **characterised in that** the receiver lens (20) has at least two zones of different focal length, wherein the receiver lens (20) has in particular at least two radially succeeding zones (52, 54) of different focal lengths; and/or
**in that** the focal length becomes larger radially outwardly from zone to zone.

12. A laser scanner in accordance with any one of the preceding claims, **characterised in that** the focal length of the receiver lens (20) becomes continuously larger moving radially from the inside to the outside, at least regionally.

13. A laser scanner in accordance with any one of the preceding claims, **characterised in that** a pulsed laser is provided as the laser (12).

## Revendications

1. Appareil à balayage laser (10) comportant : un dispositif d'émission (16) comprenant un laser (12) et une optique d'émission (14) ; un déviateur de lumière (18) ; et un dispositif de réception (24) comprenant une lentille de réception (20) et un photorécepteur optoélectronique (22) ; dans lequel la lumière (42) émise par le dispositif d'émission (16) peut, par l'intermédiaire du déviateur de lumière (18), être dirigée sous différents angles à travers une vitre frontale (40) jusque dans un champ de mesure (44), et dans lequel la lumière (48) réfléchie par un objet (46) se trouvant dans le champ de mesure (44) parvient en retour au déviateur de lumière (18) puis au dispositif de réception (24) dans l'esprit d'un rayonnement d'autocollimation, la lumière reçue (48) étant au moins partiellement masquée dans une zone centrale (50),
**caractérisé en ce qu'**il est prévu des moyens d'ajustage (64) à l'aide desquels la taille de l'ombre centrale (50', 50") de la lumière reçue (48) peut être réglée de manière variable.

2. Appareil à balayage laser selon la revendication 1,
**caractérisé en ce que** les moyens d'ajustage comprennent au moins un diaphragme réglable (64), le diaphragme (64), notamment, étant disposé, lorsqu'on le considère dans le sens de propagation de la lumière reçue (48), avant ou après la lentille de réception (20).

3. Appareil à balayage laser selon l'une des revendications précédentes,
**caractérisé en ce que** le diaphragme (64) est monté de manière mobile en rotation autour d'un axe (62), l'axe de rotation (62) du diaphragme (64), notamment, s'étendant parallèlement à l'axe optique de la lentille de réception (20).

4. Appareil à balayage laser selon la revendication 3,
**caractérisé en ce que** le diaphragme (64) monté de manière mobile en rotation autour d'un axe (62) a une forme allongée lorsqu'on le considère dans le plan de rotation.

5. Appareil à balayage laser selon l'une des revendications précédentes,
**caractérisé en ce que** l'axe de rotation (62) est disposé de manière centrée par rapport à la forme du diaphragme (64) obtenue dans le plan de rotation, et/ou **en ce que** l'axe de rotation imaginaire (62) du diaphragme (64) est disposé de manière centrée par rapport à la lentille de réception (20).

6. Appareil à balayage laser selon l'une des revendications 1 ou 2,
**caractérisé en ce que** le diaphragme (64) peut coulisser linéairement, le diaphragme (64), notamment, pouvant coulisser transversalement ou parallèlement à l'axe optique de la lentille de réception (20), et/ou **en ce que** le diaphragme (64) peut coulisser le long de l'axe optique de la lentille de réception (20).

7. Appareil à balayage laser selon l'une des revendications précédentes,
**caractérisé en ce que** le diaphragme (64) peut coulisser en direction d'un collimateur (28) associé au dispositif d'émission (16) ou transversalement audit collimateur.

8. Appareil à balayage laser selon l'une des revendications précédentes,
**caractérisé en ce qu'**une partie de l'ombre centrale maximale (50) est produite par un collimateur d'émission (28), le diaphragme (64), notamment, pouvant être réglé entre une première position (A) - dans laquelle l'ombre centrale (50', 50") adopte sa taille minimale (50') et est produite, au moins sensiblement, uniquement par le collimateur d'émission (28) - et une deuxième position (B) dans laquelle l'ombre centrale (50) adopte sa taille maximale (50").

9. Appareil à balayage laser selon l'une des revendications précédentes,
**caractérisé en ce que** le déviateur de lumière (18) comprend un miroir tournant (32).

10. Appareil à balayage laser selon l'une des revendications précédentes,
**caractérisé en ce que** le rayonnement d'autocollimation est constitué par le rayonnement d'un barrage optique d'autocollimation.

11. Appareil à balayage laser selon l'une des revendications précédentes,
**caractérisé en ce que** la lentille de réception (20) comporte au moins deux zones à distances focales différentes, la lentille de réception (20), notamment, comportant au moins deux zones (52, 54) à distances focales différentes qui se succèdent en direction radiale et/ou la distance focale augmentant radialement vers l'extérieur d'une zone à l'autre.

12. Appareil à balayage laser selon l'une des revendications précédentes,
**caractérisé en ce que**, au moins par endroits, la distance focale de la lentille de réception (20) augmente de façon continue radialement, de l'intérieur vers l'extérieur.

13. Appareil à balayage laser selon l'une des revendications précédentes,
**caractérisé en ce qu'**on prévoit comme laser (12), un laser à impulsions.
